# EUROPÄISCHE PATENTSCHRIFT

(11) **EP 0 617 650 B1**
(45) Veröffentlichungstag und Bekanntmachung des Hinweises auf die Patenterteilung: **01.05.1996**
(21) Anmeldenummer: 93901700.0
(22) Anmeldetag: 17.12.1992
(51) Int. Cl.: B23K 35/14, B23K 1/20, B23K 1/00, F01N 3/28

(54) **VERFAHREN ZUM VERLÖTEN VON TRÄGERKÖRPERN VON ABGASKATALYSATOREN**
METHOD OF SOLDERING CATALYST SUPPORTS IN CATALYTIC CONVERTERS
PROCEDE POUR LE BRASAGE DES SUPPORTS DE CATALYSEURS DE POTS D'ECHAPPEMENT

(30) Priorität: 21.12.1991 DE 4142533
(43) Veröffentlichungstag der Anmeldung: 05.10.1994
(73) Patentinhaber: Emitec Gesellschaft für Emissionstechnologie mbH, D-53797 Lohmar (DE)
(72) Erfinder: KUCHELMEISTER, Reinhold, D-7035 Waldenbuch (DE); HUMPOLIK, Bohumil, D-7140 Ludwigsburg (DE); BAYER, Jürgen, D-7300 Esslingen (DE); HALLER, Klaus, D-7000 Stuttgart 40 (DE)
(74) Vertreter: Kahlhöfer, Hermann Bardehle-Pagenberg-Dost-Altenburg-Frohwitter-Geissler & Partner Patent- und Rechtsanwälte
(86) Internationale Anmeldenummer: EP9202940
(87) Internationale Veröffentlichungsnummer: WO9312908

(56) Entgegenhaltungen:
- EP-A- 0 136 514
- DE-A- 3 726 502
- FR-A- 2 577 616
- US-A- 3 844 027

## Beschreibung

Die Erfindung betrifft ein Verfahren zum Verlöten von Trägerkörpern mit Strömungskanälen, wobei die Strömungskanäle zwischen aneinandergrenzenden Lagen von gewellten oder glatten und gewellten Metallfolien gebildet sind, die zu dem Trägerkörper gewickelt oder geschichtet sind, bei dem Lotpulver in geeigneter Korngröße in Lötspalten an den Verbindungsstellen zwischen den Metallfolien untereinander und/oder den Metallfolien und dem Mantel abgelagert wird, wobei das Lotpulver zunächst in einem Gemisch von Bindematerial und Flüssigkeit dispergiert wird, die Strömungskanäle des Trägerkörpers mit diesem flüssigen Gemisch durchflutet werden, und danach überschüssiges Gemisch aus den Strömungskanälen (10) entfernt und dann der Trägerkörper verlötet wird. Ein Verfahren dieser Art ist aus der US-A-3 844 027 bekannt. Das Verfahren gemäß US-A-3 844 027 wird auf Wabenkörper angewandt.

Die EP-A-136 514 offenbart ein Verfahren zum Verlöten von Trägerkörpern von Abgaskatalysatoren, wobei ein Lotpulver mit einer auf die Lötspalte abgestimmten Verteilung der Korngrößen vorgesehen wird und mit diesem Lotpulver die ganze Struktur des Trägerkörpers an den vorgesehenen Verbindungsstellen möglichst vollständig gefüllt wird. Das überschüssige Lotpulver wird anschließend entfernt, so daß sich nur noch Lotpulver in den Spalten in unmittelbarer Nähe der zu verbindenden Lötstellen befindet. Da kein Bindemittel bei dieser Art des Aufbringens von Lotpulver verwendet wird, kann die Gewähr, daß das Lotpulver auch gleichmäßig an alle späteren Verbindungstellen gelangt ist, nicht oder nur durch zusätzliche Verfahrensschritte, z. B. durch Verdichten oder Rütteln, erreicht werden.

Andere Verfahren, bei denen auf die zu lötenden Flächen ein Haftklebstoff aufgebracht wird, der dann mit Lotpulver bestäubt wird (EP 0 049 489 A1), lassen sich bei bereits gewickelten oder geschichteten Trägerkörpern der hier zu betrachtenden Art nicht mehr verwenden, weil die feinen wabenförmigen Strukturen der aus sehr dünnen Blechen hergestellten Trägerkörper ein solches Auftragen nicht erlauben.

Der Erfindung liegt daher die Aufgabe zugrunde, ein Verfahren der eingangs genannten Art so auszugestalten, daß Trägerkörper von Abgaskatalysatoren in einfacher Weise durchflutet werden.

Die Aufgabe wird durch ein Verfahren mit den Merkmalen des Anspruchs 1 gelöst.

In den keilförmigen Querschnittsbereichen der Strömungskanäle des Trägerkörpers können bei einer solchen Durchströmung nur sehr niedrige Geschwindigkeiten sich einstellen, so daß sich in diesen Bereichen das von dem Strömungsmedium mitgeführte Lotpulver einschließlich des Bindesmaterials ablagern wird. Nach dem Durchfluten werden die Strömungskanäle von dem überschüssigen Gemisch befreit und es verbleiben ausschließlich in den Menisken zwischen den gewellten Blechbändern und den glatten Blechbändem oder zwischen den Menisken der gewellten Blechbänder und dem Mantel mit Lot-Bindegemisch gefüllte Spalte, die nach dem Löten eine einwandfreie Verbindung gewährleisten. Dabei wird auch der Nachteil vermieden, daß Bereiche, die später nicht als Verbindungsstellen dienen, ebenfalls mit Lotmaterial versehen sind. Dies kann zu einem unerwünschten Durchlegieren und damit zu einer Festigkeitsminderung des Blechmaterials führen. Durch die Erfindung wird eine solche flächendeckende Benetzung vermieden. Die aufgebrachte Lotmenge entspricht der optimalen Dosierung an den Verbindungsstellen, und zwar über die gesamte Länge der Strömungskanäle des Trägerkörpers. Das Durchfluten wird in einfacher Weise dadurch erreicht, daß der Trägerkörper in eine Strömungsleitung eingesetzt wird.

Eine vorteilhafte Weiterbildung des erfindungsgemäßen Verfahrens ist durch den Anspruch 2 gekennzeichnet. Das überschüssige Gemisch kann, sofern es nicht schon aufgrund seiner Strömungseigenschaft aus den Strömungskanälen wieder herausläuft, durch ein zusätzliches Ausblasen oder Ausspülen aus diesen Strömungskanälen entfernt werden. Gegebenenfalls wird - insbesondere beim Ausspülen des Gemisches - eine Trocknung des Trägerkörpers erforderlich. In Weiterbildung der Erfindung kann das Strömungsprofil des Gemisches im Anströmbereich vergleichmäßigt werden. Dadurch wird die Gewähr für eine gleichmäßige Lotablagerung gegeben. Es ist aber auch möglich, einzelne Bereiche der Stirnfläche des Trägerkörpers durch eine Maske abzudecken, so daß nur in ausgewählten Bereichen Lot abgelagert wird und später eine Verlötung stattfindet. Wärmedehnungen im Trägerkörper können dadurch besser beherrscht werden.

Das erfindungsgemäße Verfahren wird anhand eines Ansführungsbeispiels im folgenden kurz erläutert. In den dazu vorgelegten Zeichnungen zeigen:
- Fig. 1: die schematische Darstellung eines Längsschnittes durch eine Strömungsleitung, in die ein Trägerkörper zum Zweck des Durchflutens mit einem Bindemittel/Lotpulvergemisch eingesetzt ist,
- Fig. 2: die vergrößerte Darstellung des Querschnitts nach der Linie II-II der Fig. 1 in einem Teilausschnitt und
- Fig. 3: schließlich eine weitere Vergrößerung des Teilausschnitts III der Fig. 2.

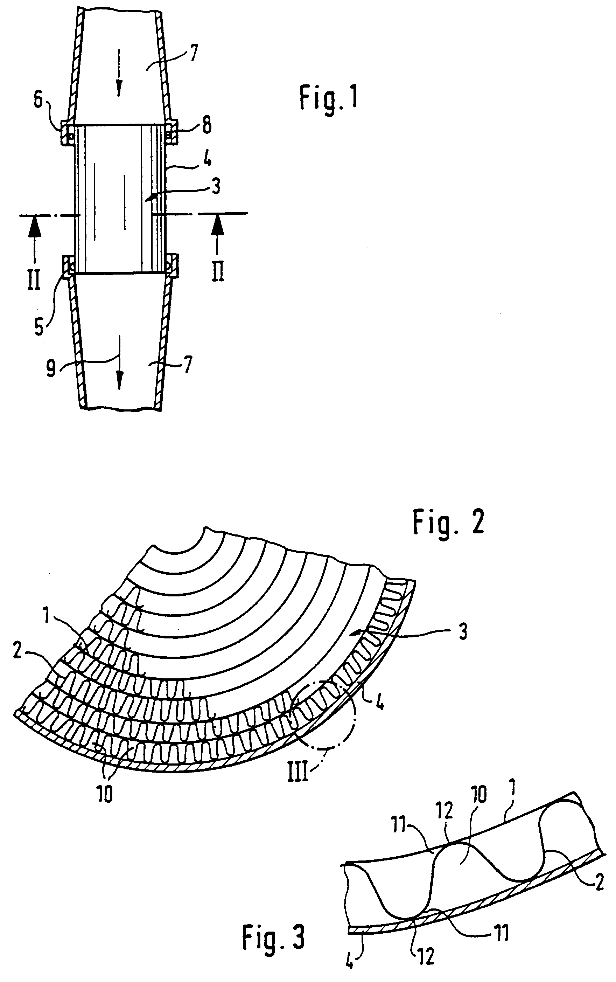

Um das erfindungsgemäße Verfahren durchführen zu können, wird zunächst ein bereits fertig aus Glattbändern 1 und gewellten Bändern 2 (Fig. 2) gewickelter Trägerkörper 3, der in einen Mantel 4 eingepreßt ist, zwischen zwei Enden 5 und 6 eine Strömungsleitung 7 eingesetzt. Der Mantel 4 wird dabei z. B. von hülsenartigen Anschlußenden 5 und 6 mit oder ohne Dichtring 8 aufgenommen. Die Strömungsleitung 7 wird in Richtung der Pfeile 9, d. h. von oben nach unten, d. h. in Richtung der Schwerkraft, von einem flüssigen Gemisch aus Lotpulver, Bindematerial und Flüssigkeit durchströmt.

Dieses Gemisch kann z. B. aus 2 - 8 g, vorzugsweise 5 g Bindematerial, z. B. Tapetenkleister und aus 200 - 1500 g, vorzugsweise 500 g Lotpulver in einer Korngröße bis max. 120 µ pro Liter Flüssigkeit, vorzugsweise Wasser, bestehen.

Aus der Fig. 2 geht hervor, daß dabei die zwischen den jeweiligen Glattbändern und den gewellten Bändern 2 gebildeten Strömungskanäle 10 von diesem Gemisch durchströmt werden.

Fig. 3 läßt erkennen, daß diese Strömungskanäle 10 jeweils in den Randbereichen, in denen das gewellte Band 2 entweder an benachbarte Glattbänder 1 oder an den Mantel 4 anstößt, keilförmige Spalte 11 bilden, und zwar jeweils vor den Berührungsstellen 12 des Wellbandes 2 mit einem Glattband 1 oder mit dem Mantel 4, die später zu Verbindungsstellen werden. In diesen Spalten 11, die auch als Menisken bezeichnet werden, tritt bei der Durchströmung mit dem flüssigen Gemisch im Vergleich zum freien Querschnittsbereich der Strömungskanäle 10 nur eine sehr geringe Strömungsgeschwindigkeit auf, die dazu führt, daß sich in diesen Spalten 11 das von dem flüssigen Gemisch mitgeführte Lotpulver einschließlich einem Anteil von Bindematerial konzentriert ablagert. Ist der Durchflutungsvorgang daher beendet, so haben sich Lotkörner, deren Größe natürlich vorher auf die Spalte 11 abgestimmt wurde, in diesen Spalten 11 abgelagert.

Um aus nicht zu den Spalten 11 gehörenden Bereichen der Strömungskanäle 10 Lotmaterial zu entfernen, kann es schon genügen, das Gemisch aus den Strömungskanälen eine gewisse Zeit ablaufen und abtropfen zu lassen. Es kann aber auch noch ein Ausblasevorgang mit Luft oder ein Ausspülvorgang mit reinem Wasser vorgesehen werden. Auch in diesem Fall erreicht die Luft- bzw. Wassergeschwindigkeit im Bereich der Spalten 11 keine solchen Werte, daß das dort abgelagerte Lotpulver entfernt wird. Der so von überflüssigem Gemisch gereinigte Trägerkörper wird anschließend getrocknet, was beim Ausblasen unter Umständen schon durch Lufttrocknung erfolgen kann. Nach dem Trocknen werden die Lotkörner durch den getrockneten Binder untereinander verklebt und dadurch zusammengehalten.

Beim anschließenden Erhitzen im Lötofen findet die gewünschte Verlötung ausschließlich an den späteren Verbindungsstellen 12 statt. Die übrigen Grenzflächen der Strömungskanäle 10 bleiben unbeeinflußt.

Durch das neue Verfahren gelingt es daher, die später nicht verbundenen Stellen der dünnen Bleche 1 und 2 von Lotmaterial freizuhalten, das Lotpulver selbst aber in optimaler Menge an den Stellen abzulagern, an denen es benötigt wird.

## Patentansprüche

1. Verfahren zum Verlöten von Trägerkörpern mit Strömungskanälen, wobei die Strömungskanäle (10) zwischen aneinandergrenzenden Lagen von gewellten oder glatten und gewellten Metallfolien (1, 2) gebildet sind, die zu dem Trägerkörper (3) gewickelt oder geschichtet sind, bei dem Lotpulver in geeigneter Korngröße in Lötspalten (11) an den Verbindungsstellen zwischen den Metallfolien untereinander und/oder den Metallfolien und dem Mantel (4) abgelagert wird, wobei das Lotpulver zunächst in einem Gemisch von Bindematerial und Flüssigkeit dispergiert wird, die Strömungskanäle (10) des Trägerkörpers (3) mit diesem flüssigen Gemisch durchflutet werden, und danach überschüssiges Gemisch aus den Strömungskanälen (10) entfernt und dann der Trägerkörper (3) verlötet wird,
**dadurch gekennzeichnet**, daß
das Verfahren auf Trägerkörper (3) von Abgaskatalysatoren angewandt wird, wobei der Trägerkörper (3) zum Zweck des Durchflutens in eine das Gemisch führende Strömungsleitung (7) eingesetzt wird.

2. Verfahren nach Anspruch 1, dadurch gekennzeichnet, daß das überschüssige Gemisch aus den Strömungskanälen (10) entfernt wird, und daß der Trägerkörper danach einer Trocknung unterworfen wird.

3. Verfahren nach Anspruch 1, dadurch gekennzeichnet, daß das Strömungsprofil des Gemisches vor dem Durchfluten des Trägerkörpers (3) vergleichmäßigt wird.

4. Verfahren nach Anspruch 1, dadurch gekennzeichnet, daß bestimmte Bereiche des Trägerkörpers (3) von einer Durchflutung ausgeschlossen werden.

## Claims

1. A method of brazing carrier bodies with flow passages, wherein the flow passges (10) are formed between mutually adjoining layers of corrugated or smooth and corrugated metal foils (1, 2) which are wound or layered to form the carrier body (3), wherein brazing powder of suitable grain size is deposited in brazing gaps (11) at the connecting locations between the metal foils to each other and/or the metal foils and the casing (4), wherein the brazing powder is firstly dispersed in a mixture of binding agent and fluid, the fluid mixture is caused to flow through the flow passags (10) of the carrier body (3), and thereafter excess mixture is removed from the flow passages (10) and then the carrier body (3) is brazed, characterised in that the method is applied to carrier bodies (3) of exhaust gas catalytic converters, wherein for the purposes of producing the flow of mixture through the carrier body (3) the carrier body is fitted into a flow conduit (7) which carries the mixture.

2. A method according to claim 1 characterised in that the excess mixture is removed from the flow passages (10) and that the carrier body is thereafter subjected to a drying operation.

3. A method according to claim 1 characterised in that the flow profile of the mixture is rendered uniform before flowing through the carrier body (3).

4. A method according to claim 1 characterised in that given regions of the carrier body (3) are excluded from a flow of the mixture therethrough.

## Revendications

1. Procédé pour braser des corps porteurs comportant des canaux d'écoulement, les canaux d'écoulement (10) étant formés entre des couches adjacentes de feuilles métalliques ondulées ou lisses et ondulées (1, 2) qui sont enroulées ou disposées en couches pour constituer le corps porteur (3), ledit procédé consistant à déposer de la poudre à braser de granulométrie appropriée dans des interstices de brasage (11) situés aux points de jonction des feuilles métalliques entre elles et/ou des feuilles métalliques et de l'enveloppe (4), la poudre à braser étant d'abord dispersée dans un mélange de matériau liant et de liquide, les canaux d'écoulement (10) du corps porteur (3) étant parcourus par ce mélange liquide, le mélange en excès étant ensuite éliminé des canaux d'écoulement (10), et le corps porteur (3) étant alors brasé, caractérisé en ce que ce procédé est appliqué à des corps porteurs (3) pour catalyseurs de gaz d'échappement, le corps porteur (3) étant implanté sur une conduite d'écoulement (7) où circule le mélange dans le but d'être parcouru par celui-ci.

2. Procédé selon la revendication 1, caractérisé en ce que le mélange en excès est éliminé des canaux d'écoulement (10), et en ce que le corps porteur est ensuite soumis à un séchage.

3. Procédé selon la revendication 1, caractérisé en ce que le profil d'écoulement du mélange est uniformisé avant que le corps porteur (3) ne soit parcouru par le mélange.

4. Procédé selon la revendication 1, caractérisé en ce que certaines zones du corps porteur (3) ne sont pas parcourues par le mélange.
